# EUROPEAN PATENT SPECIFICATION

(11) **EP 4 273 888 B1**
(45) Date of publication and mention of the grant of the patent: **19.02.2025**
(21) Application number: 22171320.9
(22) Date of filing: 03.05.2022
(51) Int. Cl.: G21C 19/34, G21C 19/36, G21C 19/37, G21D 1/00

(54) **CUTTING DEVICE AND METHOD FOR CUTTING A NUCLEAR CORE COMPONENT**
SCHNEIDVORRICHTUNG UND VERFAHREN ZUM SCHNEIDEN EINES KERNREAKTORBAUTEILS
DISPOSITIF DE DÉCOUPE ET PROCÉDÉ DE DÉCOUPE D'UN ÉLÉMENT DE COEUR DU RÉACTEUR NUCLÉAIRE

(43) Date of publication of application: 08.11.2023
(73) Proprietor: Framatome GmbH, 91052 Erlangen (DE)
(72) Inventor: MICHNA, Jürgen, 91325 ADELSDORF (DE); WIESE, Thomas Heinz, 91301 FORCHHEIM (DE); GRAU, Jochen, 91452 WILHERMSDORF (DE); GROH, Werner, 96179 RATTELSDORF (DE)
(74) Representative: Lavoix

(56) References cited:
- EP-A1- 0 321 334
- KR-A- 20060 027 472
- KR-B1- 101 687 119

## Description

The present invention concerns a cutting device for cutting a plurality of parallel fingers of at least one core component in a plane orthogonal to the longitudinal axis of the fingers, the fingers being adapted to be introduced into the fuel assembly of a nuclear reactor core, the cutting device comprising: a first bearing plate comprising a plurality of abutments respectively for a finger to be cut.

Further, the present invention relates to a method for cutting a core component. EP 0 321 334 discloses a cutting tool with parallel expansible fingers with cutting edge for a nuclear fuel assembly end piece.

KR 200060027472 A1 discloses an automatic cutting device for nuclear control rods equipped with a transfer means. A base frame is movable between upper and lower supports. Further, driving means are mounted to the base frame and a plurality of moving members connected to the drive means. A plurality of cutters are mounted on the moving members at regular intervals.

However, the known device is complicated to be operated and requires a lot of power. Further, a contamination of other components of the nuclear power plant has to be avoided. The remaining parts after cutting the core component have to be identifiable. Each control rod has to be cut between 1 and 10 times.

Object of the invention is to cut a core component of a nuclear power plant in a simple and efficient manner. Further, the cutting device should provide an enhanced security and in particular reduce the contamination of the environment, for example of the water of a pool and the atmosphere.

According to one aspect, a cutting device is provided for cutting a plurality of parallel fingers of at least one core component in a plane orthogonal to the longitudinal axis of the fingers, the fingers being adapted to be introduced into the fuel assembly of a nuclear reactor core, the cutting device comprising:
a first bearing plate comprising a plurality of abutments respectively for a finger to be cut, wherein the cutting device further comprises:
a rotatable cutting plate comprising a corresponding cutting blade for each abutment in the first bearing plate, the rotatable cutting plate being rotatable about a rotating axis between a starting position and a final position in a circumferential direction, the first bearing plate and the cutting plate being parallel to each other, the cutting blades comprising a plurality of groups of cutting blades, wherein for each group of cutting blades the angle between the cutting blades and the corresponding abutments is different to an angle between the cutting blades and the corresponding abutments of any other group of cutting blades.

Further embodiments may relate to one or more of the following features, which may be combined in any technical feasible combination:
- the cutting device comprises at least three groups of cutting blades;
- each group of cutting blades comprises at least four cutting blades;
- the first bearing plate is arranged above or below the cutting plate and adjacent to the cutting plate;
- the cutting device comprises a second bearing plate, wherein one of the first and second bearing plates is arranged below the cutting plate and adjacent to the cutting plate, and the other of the first and second bearing plates is arranged above the cutting plate and adjacent to the cutting plate;
- the first bearing plate and/or the second bearing plate comprises a plurality of holes, wherein the abutments are provided at an inner surface of the respective holes;
- the cutting device comprises at least one sealing device arranged above the cutting plate, and, in particular, above the first or second bearing plate and adjacent to the first or second bearing plate, wherein the sealing device comprises for each abutment a respective passage for the fingers, wherein the passages are aligned to the respective abutments, wherein the sealing device is in particular adapted to seal the fingers when they are inserted into the passage;
- the sealing device can be deactivated and activated, wherein, when the sealing device is activated, the diameter of the one or more passages of the sealing device is reduced and, in particular, when the sealing device is deactivated the diameter of the one or more passages of the sealing device is increased;
- the sealing device is electrically, mechanically, pneumatically and/or hydraulically activated;
- the at least one sealing device is a sealing plate;
- at least one channel is provided in the sealing device, the first bearing plate and/or the second bearing plate, wherein the at least one channel guides gases from the abutments away;
- the cutting device includes a one or more pneumatic or hydraulic cylinders in order to rotate the cutting plate about the rotating axis; and/or
- the core component is a control rod assembly, a neutron source, poisson rods, and/or a flow restrictor.

According to another aspect, a method is provided for cutting a plurality of parallel fingers of at least one core component in a plane orthogonal to the longitudinal axis of the fingers with a cutting device according to one of the preceding claims, the fingers being adapted to be introduced into the fuel assembly of a nuclear reactor core, the method comprising:
inserting the fingers into the cutting device;
rotating the cutting plate from the starting position to the final position, wherein a first portion of the fingers is cut during a first phase of the rotating movement of the cutting plate from the starting position to the final position and a second portion of the fingers is cut during a second phase of the rotating movement of the cutting plate from the starting position to the final position.

Further embodiments may relate to one or more of the following features, which may be combined in any technical feasible combination:
The method further comprises: prior to rotating the cutting plate, activating the sealing device; and during the rotation of the plate, sucking gases from the space around the abutments.

Further advantages, features, aspects and details are evident from the dependent claims, the description and the drawings.

The accompanying drawings relate to embodiments of the invention and are described in the following:
Fig. 1 shows a perspective view of a cutting arrangement comprising a cutting device for core component of a nuclear power plant;
Fig. 2 shows a perspective view of the cutting device;
Fig. 3 shows a top view of the cutting device;
Fig. 4 shows schematically a sectional view of the cutting device according to an embodiment;
Fig. 5 shows schematically a sectional view of the cutting device according to another embodiment in a first configuration;
Fig. 6 shows schematically a sectional view of the cutting device according to the embodiment of Fig. 5 in a second configuration;
Fig. 7 shows schematically an exploded view of the cutting device according to an embodiment;
Fig. 8 shows schematically a sectional view of the cutting device during the cutting of a rod;
Fig. 9 shows an enlarged view of Figure 7;
Fig. 10 shows schematically a section view of the cutting device after the rod is cut;
Fig. 11 shows an enlarged view of Figure 9; and
Fig. 12 shows a flow chart of a method according to an embodiment.

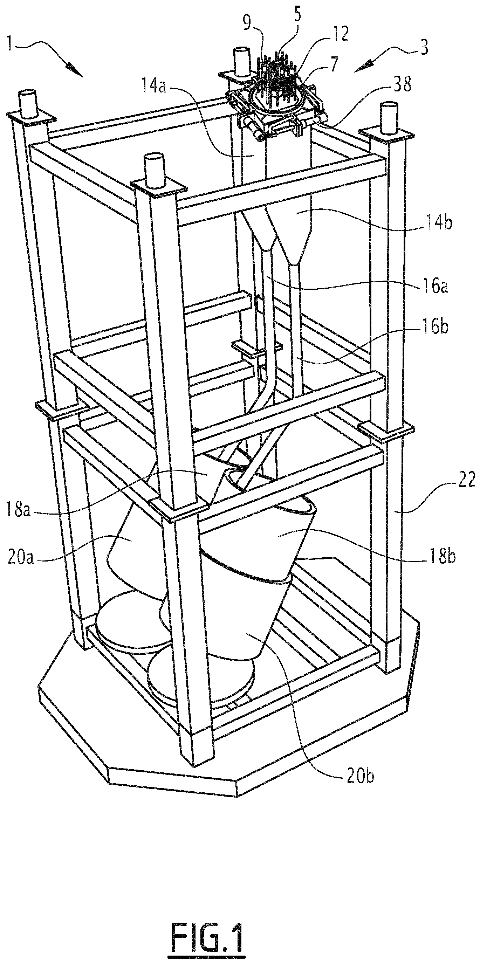

Fig. 1 shows a perspective view of a cutting arrangement 1 comprising a cutting device 3 for core component 5 of a nuclear power plant. The core component 3 is adapted to be introduced into a fuel assembly of a nuclear reactor core.

The term "above" and "below" are used herein with respect to an arrangement of the cutting device as shown in Figure 1. The same reference signs designate the same components throughout the drawings, even when they are not described again with respect to each drawing.

According to embodiments, the arrangement 1 is arranged under water, for example in a depth between 3m and 12m. For example, the cutting arrangement 1 may be placed in a pool, for example a used fuel assembly pool. In some embodiments, the water is slightly acid. For example, the water may be deionized water including boric acid. Further, it should be noted that the cutting arrangement is operated under heavy radiation, for example gamma or beta radiation. The temperature of the water may be between 30 and 50 degrees Celsius. In other words, the cutting arrangement 1 is operated in a contaminated environment.

For example, the core component 5 may be a control rod assembly, a neutron source, poisson rods, and/or a flow restrictor. The core component 5 comprises a plurality of parallel fingers 7 extending in parallel to the longitudinal axis X of the core component 5. In other words, the longitudinal axis of the fingers is parallel to the longitudinal axis X of the core component 5. The core component 5 further comprises a holding portion 9, which is also called spider.

The fingers 7 are fixed to the holding portion 9. In an embodiment, about 12 to 30 fingers 7 are fixed to the holding portion 9, in particular between 15 and 25 fingers. Each finger has a diameter of about 10mm. The fingers may be filled with another material, for example neutron absorbing material, or may be solid.

According to embodiments, the fingers 7 are made of zirconium, stainless steel, an alloy of zirconium or an alloy of stainless steel.

The fingers 7 have usually a length of about 4 to 5m. In other embodiments, the fingers 7 may have a length of about 20cm to 80cm.

In some embodiments, the fingers 7 are arranged, in a section orthogonal to the longitudinal direction, point symmetrical with respect to the longitudinal axis X of the core component X.

A damping element 12 is provided in the core component 5, in particular at the holding portion 9, in particular at the longitudinal axis X. According to embodiments, the damping element 12 covers about 4x4 to 5x5 of the fuel rods of the fuel assembly. In this area, no fingers of the core component 5 are provided.

In an embodiment, instead of a core component 5 comprising a plurality of fingers 7, a plurality of fingers 7 may be hold in parallel to each other by a gripping device comprising a plurality of grippers for holding the plurality of fingers in parallel. In other words, the longitudinal axis of the fingers is parallel. The plurality of fingers 7 may be originating from one or more core components 5. The gripping device is then moving the plurality of fingers into the cutting device 3.

Alternatively, the cutting arrangement 1 may comprise a feeding device for feeding a plurality of fingers 7 in parallel towards the cutting device 3, in particular towards the abutments of the cutting device 3. For example, the feeding device may comprise one or more quiver like containers directing the plurality of fingers 7 towards the cutting device 3. The feeding device enables to feed continuously the fingers in parallel towards the cutting device 3. In an embodiment, the feeding device may be arranged above the cutting device. The plurality of fingers 7 may be originating from one or more core components 5.

The cutting arrangement 1 comprises below the cutting device 3 at least one funnel shaped section 14a, 14b, for example two funnel shaped sections 14a, 14b. Each funnel shaped sections 14a, 14b are arranged below a respectively a portion of the fingers 9. There may be also more funnel shaped sections, for example, three or four funnel shaped sections in some embodiments.

For example, a half of the fingers is arranged above a first funnel shaped section 14a and the other half of the fingers 9 is arranged above a second funnel shaped section 14b. This enables that only a part of the cut fingers 9 fall into the respective funnel shaped sections 14a, 14b. The funnel shaped sections 14a, 14b enable to align the cut portions of the fingers 9.

The lower end or downstream end of the one or more funnel shaped sections 14a, 14b is connected to a respective tube 16a, 16b. The aligned cut portions of the fingers 9 are aligned such that they are parallel to the longitudinal axis of the tube section of the one or more tubes 16a, 16b adjacent to the one or more funnel shaped sections 14a, 14b. The one or more tubes 16a, 16b guide the cut portions of the fingers 9 each into a respective container 18a, 18b.

The one or more containers 18a, 18b are respectively mounted on a vibrating and inclining device 20a, 20b. The vibrating and inclining device 20a, 20b can incline and/or vibrate the containers 18a, 18b in order to obtain a dense storage of the cut portions of the fingers 9.

Each vibrating and inclining device 20a, 20b is mounted on a carrier structure 22, in particular at a lower end of the carrier structure 22. The cutting device 3 is mounted at an upper end of the carrier structure 22. The carrier structure height can be adapted to the canister design is usually in a range of about 3 to 5 m.

In an embodiment, the one or more containers 18a, 18b are directly mounted on the carrier structure 22, in particular if no vibrating and inclining device 20a, 20b is used.

The cutting device 3 can be operated with the longitudinal axis X of the core component 5 arranged vertically as shown in the Figures or horizontally. The cutting device 3 can be also operated at other angles. The one or more funnel shaped sections 14a, 14b are then formed and/or arranged accordingly. In other words, during operation of the cutting device 3 the holding portion 9 is arranged at the same level as or at a level above the fingers 9.

In one embodiment, the cutting device 3 can be operated without any support structure 22. For example, the cutting device 3 as arranged directly on the storage racks of spent nuclear fuel.

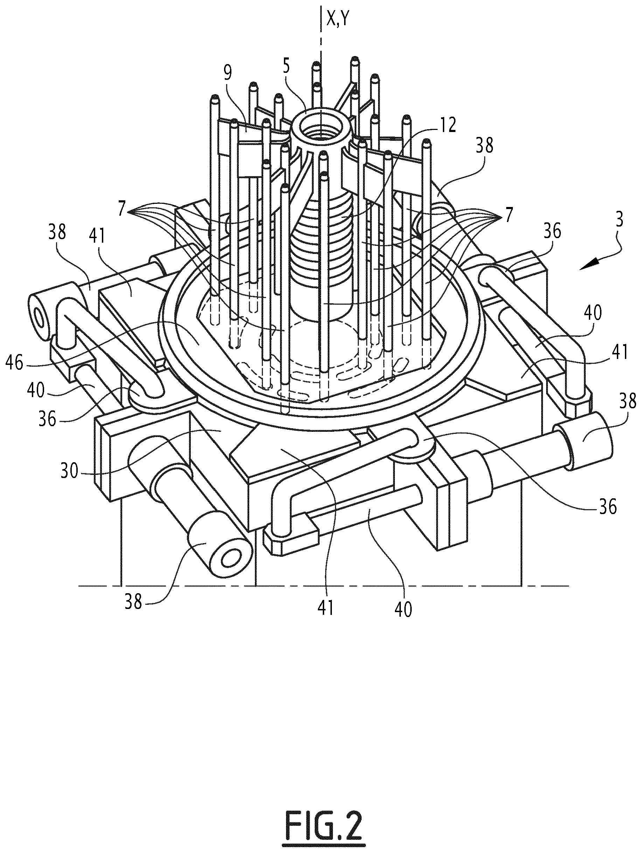

The cutting device 3 according to an embodiment is now described in more detail with respect to Figures 2, 3 and 4.

The cutting device 3 includes a lower bearing plate 30. The lower bearing plate has for each finger 9 a respective hole 32. The hole 32 has a diameter, which is slightly larger than the diameter of the finger 9. In an embodiment, the hole 32 has a circular cross section. For example, the diameter of each hole 32 is about 1% larger than the diameter of the respective finger 7. In an embodiment, each hole 32 has a diameter of about 11 to 13mm. In some embodiments, the hole 32 has a slightly keyhole shape. In such a case, the cut portion of the finger is prevented to be stucked in the hole 32.

A rotatable cutting plate 34 is arranged above and adjacent to the lower bearing plate 30. The rotatable cutting plate 34 has at its outer circumference a plurality of ears 36 extending in radial direction. In the example shown, four ears 36 are shown. However, the cutting plate 34 may comprise more or less ears, for example, two, three, five or six ears 36. The rotating cutting plate 34 rotates about a rotating axis Y, which corresponds to the longitudinal axis X when the core component 5 is inserted into the cutting device 3. According to embodiments, a single cutting plate 34 is used. In another embodiment, the cutting plate 34 is formed by a plurality of subplates that are fixed together during operation of the cutting device 3. In other words, the subplates are in a fixed relation to each other each.

Thus, the cutting device may be operated such that the rotating axis Y is arranged horizontally or vertically. The cutting device 3 can be also operated at other angles. During operation, the lower bearing plate 30 is therefore at the same level or below cutting plate 34.

The upper and lower surfaces of the lower bearing plate 30 and/or the cutting plate 34 extend in parallel to each other and are orthogonal to the rotating axis Y. In other words, the lower bearing plate 30 and the cutting plate 34 are parallel to each other.

The cutting device 3 further comprises a plurality of cylinders, for example hydraulic cylinders 38 for rotating or moving the cutting plate 34. In Figure 2, four cylinders 38 are shown. However, the cutting device 3 may comprise more or less cylinders 38, for example, two, three, five or six cylinders 38.

Each cylinder 38 is connected via its piston 40 to respectively one of the ears 36.

The cylinders 38 are driven with a hydraulic liquid for example water . A hydraulic cylinder enables to have high cutting forces. In other embodiments, the cylinders may be driven manually, pneumatically or electrically.

According to embodiments, the cutting plate 34 could be rotated by the cylinders 38 about the rotating axis Y about between 60 and 120 degrees, for example 90 degrees. The cylinders 38 are adapted to drive the respective pistons 40 with a reciprocating movement. For example, the cutting plate 34 is rotatable between a starting position and a final position in a circumferential direction C. After reaching the final position, the cylinders can move the cutting plate 34 back to the starting position.

According to embodiments, the cutting plate 34 has the form of a disc, in particular a circular disc, in particular with the one or more ears 36 protruding outwardly.

In some embodiments, the cutting plate 34 is hold by one or more radial bearings 41 holding the cutting plate 34 in radial direction. For example, the cutting device 3 comprises two or more radial bearings 41, which are placed opposite from each other and/or at regular intervals around the circumferential direction C.

Generally, a roller bearing or a sliding bearing is used for the cutting plate 34.

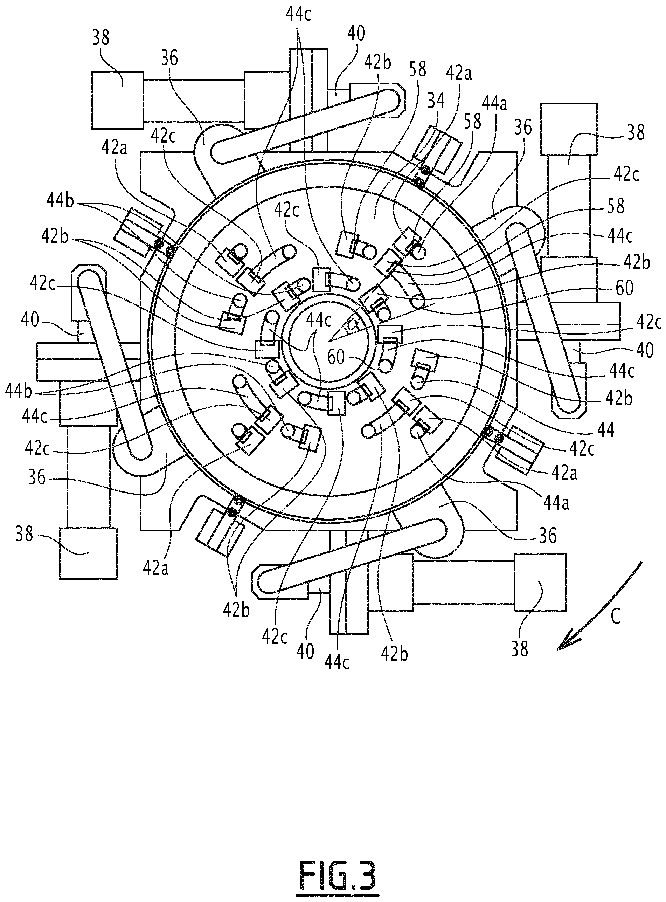

Figure 3 shows the cutting device 3 in a top view. The cutting plate 34 comprises a plurality of cutting blades 42a, 42b, 42c. In particular, for each finger 7 of the core component 5 a separate cutting blade 42a, 42b, 42c is provided.

The cutting plate 34 further comprises adjacent to each of the cutting blades 42a, 42b, 42c a respective hole 44a, 44b, 44c. The cutting blades 42a, 42b, 42c are provided respectively at the same end of the respective holes 44a, 44b, 44c in the circumferential direction C.

The cutting blades 42a, 42b, 42c are formed and/or arranged such that they are able to cut a finger 7, when the cutting plate 34 is rotated in the circumferential direction C. In other words, the cutting plate 34 is adapted to cut, in particular the fingers 7, if the cutting plate 34 is rotated in the circumferential direction C.

The cutting device 3 comprises a first upper bearing plate 46 above and adjacent to the cutting plate 34. In Figure 2 only a portion of the first upper bearing plate 46 is shown in order to enable a view on the cutting plate 34. However, the first upper bearing plate 46 covers completely the cutting plate 34.

The upper and lower surfaces of the first upper bearing plate 46 and/or the cutting plate 34 extend in parallel to each other and are orthogonal to the rotating axis Y. In other words, the first upper bearing plate 46 and the cutting plate 34 are parallel to each other.

Further, there is provided a second upper bearing plate 48 above the first upper bearing plate 46. The first and second upper bearing plates 46, 48 are spaced apart from each other.

The upper and lower surfaces of the first and second upper bearing plates 46, 48 extend in parallel to each other and are orthogonal to the rotating axis Y. In other words, the first upper bearing plate 46 and the second upper bearing plate 48 are parallel to each other.

Each upper bearing plate 46, 48 comprises a plurality of holes 50, 52 for the fingers of the core component.

According to an embodiment, the first upper bearing plate 46 comprises for each finger 7 a respective hole 50. The diameter of each hole 50 is slightly larger than the diameter of the fingers 7. For example, the diameter of each hole 50 is about 1% larger than the diameter of the respective finger 7. In an embodiment, each hole 50 has a diameter of about 11 to 13mm to be adapted to the specific diameter of the finger 7 to be cut.

In some embodiments, which may be combined with other embodiments disclosed herein, the first upper bearing plate 46 has for each finger 7 of the core component a respective abutment 54. The abutment 54 is provided to hold the finger 7 fixed when the cutting plate 34 is rotated in the circumferential direction C and the cutting blade attacks the respective finger 7. The abutments 54 are provided, such that they are facing into a direction opposite to the circumferential direction C. In other words, the abutments 54 are provided such that they are facing into a direction opposite to the direction the cutting plate 34 is moving from the starting position to the final position. According to embodiments, the abutments 54 are provided at an inner surface of the holes 50.

In an embodiment, which may be combined with other embodiments disclosed herein, the lower bearing plate 30 has for each finger 7 of the core component a respective abutment 56. The abutment 56 is provided to hold the finger 7 fixed when the cutting plate 34 is rotated in the circumferential direction C and the cutting blade attacks the respective finger 7. The abutments 56 are provided, such that they are facing into a direction opposite to the circumferential direction C. In other words, the abutments 56 are provided such that they are facing into a direction opposite to the direction the cutting plate 34 is moving from the starting position to the final position. According to embodiments, the abutments 56 are provided at an inner surface of the holes 32.

According to an embodiment, the second upper bearing plate 48 comprises for each finger 7 a respective hole 52. The diameter of each hole 52 is slightly larger than the diameter of the fingers 7. For example, the diameter of each hole 52 is about 1% larger than the diameter of the respective finger 7. In an embodiment, each hole 52 has a diameter of about 11 to 13mm to be adapted to the specific diameter of the finger 7 to be cut.

As the first upper bearing plate 46 and/or the lower bearing plate 30 comprises a number of holes 32, 50 and/or abutments 54, 56 corresponding to the number of fingers 7, the number and/or arrangement of the cutting blades 42a, 42b, 42c of the cutting plate 34 corresponds to the number of holes 32, 50 and/or abutments 54, 56 in the first upper bearing plate 46 and/or the lower bearing plate 30.

According to embodiments, the cutting plate 34 is sandwiched between the lower bearing plate 30 and the first upper bearing plate 46. Further, in radial direction the cutting plate 34 is hold by the one or more radial bearings 41. Thus, the cutting pate 34 is guided radially and axially. In particular, the cutting plate 34 performs a guided movement between the starting position and the final position.

Each abutment 54, 56 of the lower bearing plate 30 and/or the first upper bearing plate 46 has a corresponding cutting blade 42a, 42b, 42c of the cutting plate 34. Each abutment 54, 56 of the lower bearing plate 30 and/or the first upper bearing plate 46 and its corresponding cutting blade 42a, 42b, 42c operate together during the cut of a respective finger 7. Each abutment 54, 56 inhibit a movement of the respective inserted finger 7 in the circumferential direction C when the corresponding cutting blade 42a, 42b, 42c attacks said finger 7.

According to embodiments, the cutting blades 42a, 42b, 42c comprise a plurality of groups of cutting blades. For example, the cutting blades 42a, 42b, 42c comprise two, three, four or five groups of cutting blades 42a, 42b, 42c.

In the starting position of the cutting plate 34, each cutting blade 42a, 42b, 42c, in particular their cutting face 58 in circumferential direction C, has an angle α or angular distance with respect to the corresponding abutment 54, 56 of the lower bearing plate 30 and/or the first upper bearing plate 46. The angle is determined from the rotating axis Y. For the sake of simplicity, only one angle α is shown in Figure 3.

In the embodiment shown in Figure 3, the holes 44a, 44b, 44c have an end being opposite to the cutting blades 42a, 42b, 42c in circular direction C. That end having a surface 60 facing in opposite direction of the circumferential direction. In the starting position of the cutting plate 34, the surface 60 is aligned, in the circular direction C, with the corresponding abutments 54, 56 of the first upper bearing plate 46 and/or the lower bearing plate 30.

Even though a surface 60 is shown in Figure 3, it is evident from the principle that it is not necessary that the holes 44a, 44b, 44c have a surface 60 aligned with the corresponding abutments 54, 56 in the starting position. Rather, the angle or distance between the abutments 54, 56 and the corresponding cutting blades 42a, 42b, 42 in the starting position of the cutting plate 34 is essential for the functioning. Figure 3 thus helps to understand the working principle shown with respect to a non-limiting specific embodiment.

As it can be seen with respect to Figure 3, in the starting position of the cutting plate 34, a first group of cutting blades 42a being positioned at a different angle to the respective corresponding abutment 54, 56 compared to the angle between a second group of cutting blades 42b, 42c and their respective corresponding abutments 54, 56. In an embodiment, a first group of cutting blades 42a being positioned at a first angle to their respective corresponding abutment 54, 56, the second group of cutting blades 42b being positioned at a second angle to their respective corresponding abutment 54, 56, and a third group of cutting blades 42c being positioned at a third angle to their respective corresponding abutment 54, 56, wherein the first angle is different to the second angle or the third angle, and the third angle is different to the second angle. In other words, for each group of cutting blades the angle between the cutting blades 42a, 42b, 42c, in particular their cutting face 58 in circumferential direction C, and the corresponding abutments 54, 56 is different to an angle between the cutting blades 42a, 42b, 42c, in particular their cutting face 58 in circumferential direction C, and the corresponding abutments 54, 56 of any other group of cutting blades 42a, 42b, 42c.

According to an embodiment, the in the starting position the first group of cutting blades 42a being positioned at a different distance, in particular in circumferential direction, to the respective corresponding abutment 54, 56 compared to the distance, in particular in circumferential direction, between a second group of cutting blades 42b, 42c and their respective corresponding abutments 54, 56. In an embodiment, a first group of cutting blades 42a being positioned at a first distance, in particular in circumferential direction, to their respective corresponding abutment 54, 56, the second group of cutting blades 42b being positioned at a second distance, in particular in circumferential direction, to their respective corresponding abutment 54, 56, and a third group of cutting blades 42c being positioned at a third distance, in particular in circumferential direction, to their respective corresponding abutment 54, 56, wherein the first distance is different to the second distance or the third distance, and the third distance being different to the second distance. In other words for each group of cutting blades the distance, in particular in circumferential direction, between the cutting blades 42a, 42b, 42c, in particular their cutting face 58 in circumferential direction C, and the corresponding abutments 54, 56 is different to a distance, in particular in circumferential direction, between the cutting blades 42a, 42b, 42c, in particular their cutting face 58 in circumferential direction C, and the corresponding abutments 54, 56 of any other group of cutting blades.

Thus, when a plurality of fingers 7 are inserted in the holes of the first upper bearing plate 46 and/or the lower bearing plate 30 and the cutting plate 34 is rotated from the starting position to the final position, a first group of fingers 7 is cut first, a second group of fingers is cut subsequently and a third group of fingers 7 is cut finally.

In Figure 3, the first group cutting blades comprises cutting blades 42a, a second group of cutting blades include cutting blades 42b and the third group of cutting blades include cutting blades 42c. According to embodiments, the number of groups of cutting blades is not limited to three, but there may be only two groups of cutting blades, or four, five or six groups of cutting blades.

In case the surface 60 is aligned with the abutments 54, 56 in the starting position of the cutting plate 34, for each group of cutting blades the holes 44a, 44b, 44c of the cutting plates 34 present a different length in the circumferential direction C compared to the length of holes 44a, 44b, 44c of any other group of cutting blades 42a, 42b, 42c.

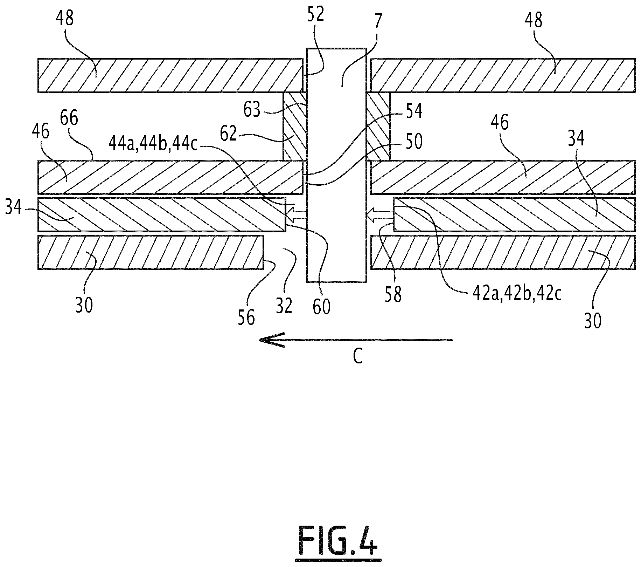

Figure 4 shows schematically a portion of the cutting device 3 in a sectional view. As it can be seen, there is arranged a respectively a sleeve 62 between each hole 50 of the first upper bearing plate 46 and the corresponding hole 52 the second upper bearing plate 48. The hole 50 and the corresponding hole 52 are arranged above each other or aligned in axial direction of the rotational axis Y. In other words, the respective passages 63 of the sleeves 62 is aligned to the holes 50, 52 and/or 32 of the lower bearing plate 30, the first upper bearing plate 46 and/or the second upper bearing plate 48. In embodiments, the respective passages 63 of the sleeves 62 is aligned to the abutments 54, 56 of the lower bearing plate 30 and/or the first upper bearing plate 46.

The sleeves 62 are adapted to enclose tightly the finger 7 of the core component 5. For that purpose, a passage 63 of the sleeve 62 has a diameter which can be slightly smaller than the outer diameter of the fingers 7. The sleeves 62 seals the lower portion of the cutting device 3, including in particular the cutting plate 34 and the first upper bearing plate 46 from an upper portion of the cutting device 3 comprising the second upper bearing plate 48.

The sleeves 62 are made of flexible and/or elastic material, for example rubber, silicone, natural rubber, and the like.

The sleeves 62 are adapted to catch at least a part, in particular the majority, of the radiolytic gases escaping during the cutting of the fingers 7. For example, the radiolytic gases are present inside the respective fingers 7.

The sleeves 62 may be integrated in a sealing plate covering the first upper bearing plate 46, in particular at least a portion of the first upper bearing plate 46 including the holes 50.

The gases are then sucked away by a respective device, as it will be explained later. For example, a waterjet pump may be used for that purpose.

The sleeves 62 and/or the sealing plate incorporating the sleeves 62 form therefore a sealing device. The sleeves 62 may be formed integrally with the sealing plate.

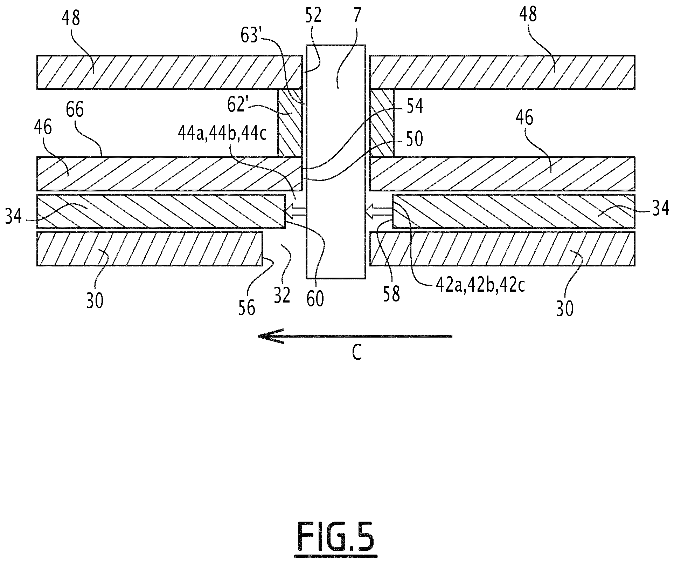

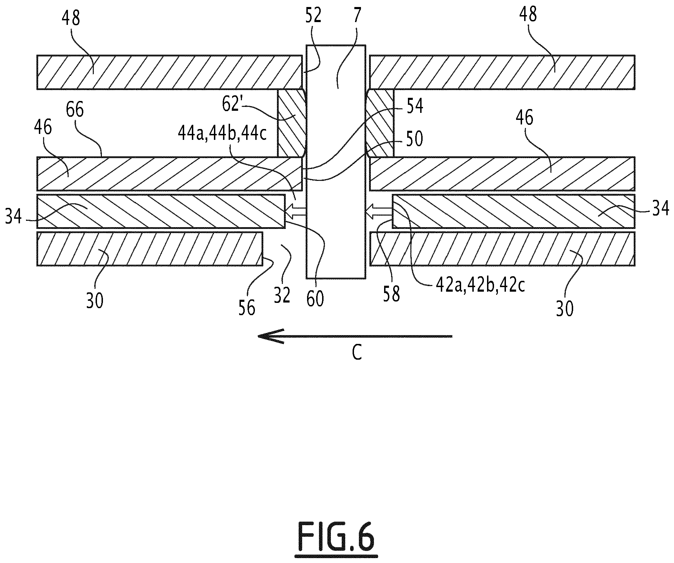

Figures 5 and 6 shows schematically a portion of the cutting device 3 in a sectional view of another embodiment. The cutting device includes a sleeve 62'. The sleeve 62' has a passage 63' with a diameter, which corresponds substantially to the diameter of the holes 50, 52 of the first upper bearing plate 46 and the second upper bearing plate 48 or it may be slightly larger. The diameter of the passage 63' may be also called inner diameter of the sleeve 62'.

There is arranged a respectively a sleeve 62' between each hole 50 of the first upper bearing plate 46 and the corresponding hole 52 the second upper bearing plate 48. The hole 50 and the corresponding hole 52 are arranged above each other or are aligned in axial direction Y. In other words, the respective passages 63' of the sleeves 62' is aligned to the holes 50, 52 and/or 32 of the lower bearing plate 30, the first upper bearing plate 46 and/or the second upper bearing plate 48. In embodiments, the respective passages 63' of the sleeves 62' is aligned to the abutments 54, 56 of the lower bearing plate 30 and/or the first upper bearing plate 46.

The diameter of the passage 63', in particular in the deactivated state, may be chosen such that a cut finger 7 may not accidentally harm or destroy the sleeves 62'.

Upon activation as shown in Figure 6, the inner diameter of the sleeve 62' is reduced. The reduction of the inner diameter is performed pneumatically, electrically, mechanically or hydraulically. The activation is typically performed, after the fingers 7 have been inserted into the cutting device 3. For example, the first and second bearing plates 46, 48 may have to different positions with respect to each other a first position where they are more distant and a second position where the first and second upper bearing plates 46, 48 are approached to each other and thus pressing the sleeve 62' such that it extends inwardly, for example towards an inserted finger 7. For example, the second upper bearing plate 48 may be pressed hydraulically towards the first upper bearing plate 46.

When the sleeves 62' are deactivated, the inner diameter retracts to the original position, as shown in Figure 5. In other words, the diameter of the one or more passages (63') of the sealing device is increased, when the sealing device 62' is deactivated.

The sleeves 62' may be integrated in a sealing plate 64 covering the first upper bearing plate 46, in particular at least a portion of the first upper bearing plate 46 including the holes 50. In such a case, all sleeves 62' may be activated at the same time. The sleeves 62' may be formed integrally with the sealing plate 64.

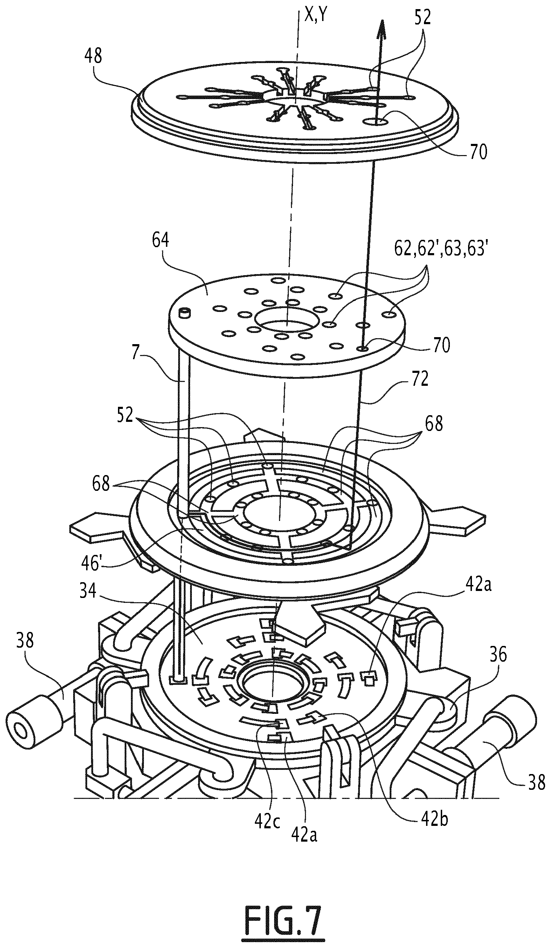

For example, in such a case the sleeves 62' may be formed by a sealing plate 64 as shown in the Figures 7 to 11. In an embodiment, the sealing plate 64 is a rubber sealing plate. In an alternative embodiment, the sealing plate 64 is formed by a gas-filled cushion. In such a case, by provided pneumatically or hydraulically additional pressure into the cushion or by pressing the cushion, the inner diameter of all the sleeves 62' is reduced at the same time. In other words, all the sleeves 62' are activated at the same time.

The sleeves 62' and/or the sealing plate 64 incorporating the sleeves 62' form therefore a sealing device.

Figure 7 shows an embodiment of a first upper bearing plate 46', which is arranged below a sealing plate 64. The embodiment of the first upper bearing plate 46' may be used in combination with embodiments disclosed herein.

The upper surface 66 of the first upper bearing plate 46' is provided with a plurality of first channels 68 fluidly connecting the holes 50 to at least one second channel 70. The first channels 68 are arranged in the upper surface 66. In other words, in first channels 68 guide the gases in directions orthogonal to the rotating axis Y. The at least one second channel 70 is formed through the sealing plate 64 and, in particular the second upper bearing plate 48. In embodiments without second upper bearing plates 48, the at least one second channel 70 is merely formed through the sealing plate 64.

The at least one second channel 70 extends parallel to the rotating axis Y.

According to embodiments, there may be two, three or more second channels 70.

In some embodiments, the second channels 70 are connected to a suction device.

In an alternative embodiment, the sealing plate 64 may be provided with the first channels 68 at its lower surface. In another embodiment, the first channels 68 are provided inside the first upper bearing plate, in particular in case sealing sleeves 62, 62' are used. In such a case, a specific duct is provided between the first upper bearing plate 46 and the suction device and/or the second upper bearing plate 48.

In other words, the channels 68, 70 guides the gases from the space around the abutments 54, 56, which are in particular formed in holes 32, 50 of the first upper bearing plate 46 and the lower bearing plate 30 away, in particular to the suction device (not shown).

The arrow in Figure 7 shows the flow path 72 of the gases through the cutting device 3, in particular through the first upper bearing plate 46' in the first channels and through the sealing plate 64 and the second upper bearing plate 48 in the second channel 70.

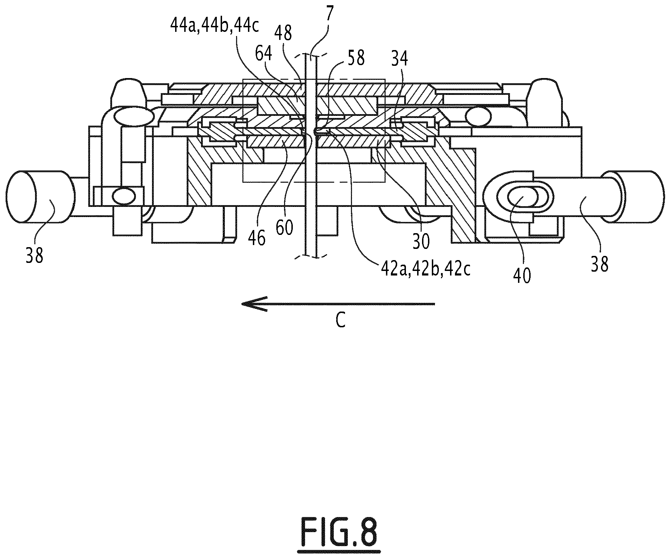

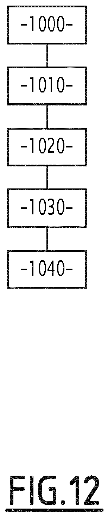

The method for cutting a core component 3 having a plurality of fingers 7 will be now described with respect to Figures 8 to 12.

In a first step 1000, the fingers 7 of the core component 5 is inserted into the cutting device 3. In particular, for inserting the fingers 7 into the cutting device the core component is moved along the longitudinal axis X. In other words, each fingers 7 of the core component 5 is introduced into a respective hole 32, 50, 52 of the lower bearing plate 30, first upper bearing plate 46, 46' and/or the second upper bearing plate 48.

In the optional step 1010, the one or more sealing devices 62', 64 are activated. For example, as described above, the second upper bearing plate 48 is pressed towards the first upper bearing plate 46, 46', for example using pneumatic or hydraulic devices. Also other possibilities, for example a pneumatic, hydraulic, electric means, may be used to activate the one or more sealing devices 62', 64, as described above.

The cutting region of the fingers 7 is thus sealed with respect to the environment. Thus, the gases inside the fingers 7, could be evacuated via the first and/or second channels as described above.

In further step 1020, the cutting plate 34 is moved or rotated from the starting position to the final position, wherein a first portion of the fingers 7 is cut during a first phase of the rotating movement of the cutting plate 34 from the starting position to the final position and a second portion of the fingers 7 is cut during a second phase of the rotating movement of the cutting plate 34 from the starting position to the final position. In further embodiments, the rotating movement of the cutting plate 34 from the starting position to the final position may comprise three phases, wherein in the third phase a third portion of the fingers 7 is cut. In further embodiments, the movement may include also four, five or six phases, in which respectively a portion of the fingers 7 is cut. During the rotating movement of the cutting plate 34, the core component is not moved along the longitudinal axis X.

In some embodiments, each phase starts, when the respective cutting blade 42a, 42b, 42c contacts a finger, and ends, when the finger is cut, for example when the respective cutting blade 42a, 42b, 42c, in particular its cutting face 58, reaches the corresponding abutment 54, 56 of the first upper bearing plate 46 and/or the lower bearing plate 30. For example, each phase starts, when the respective cutting blade 42a, 42b, 42c reaches the hole 52, 50 of the first upper bearing plate 46 and/or the lower bearing plate 30.

According to embodiments, which may be combined with other embodiments disclosed herein, the cutting blades 42a, 42b, 42c are arranged on the cutting plate 34 such that two subsequent phases for cutting a portion of the fingers 7 overlap. For example, a first group of cutting blades starts 42a to cut their fingers when a second group 42b of cutting blades has nearly finished cutting their respective fingers 7. In an embodiment, the distance in a circumferential direction between the cutting blades 42a of a first group of cutting blades and the cutting blades 42b of a second group of cutting blades is less than the diameter of the fingers to be cut and/or the diameter of the hole 52, 50 of the first upper bearing plate 46 and/or the lower bearing plate 30. In other words, the angle, determined from the rotating axis Y, between the cutting blades 42a of a first group of cutting blades and the cutting blades 42b of a second group of cutting blades is selected, such that two subsequent phases for cutting a portion of the fingers 7 overlap. In an embodiment during a first phase only the outer fingers are cut at the same time, for example the outer four fingers 7. For example, the cutting blades 42a are used for that purpose.

Then, a plurality of inner fingers is cut at the same time, four example 8 inner fingers 7. For example, the cutting blades 42b are used for that purpose. The fingers to be cut are selected, such that a force applied to the cutting plate 34 is equally distributed. In other words, the cutting blades 42b are distributed regularly around the rotating axis Y.

Finally, the remaining 8 inner fingers are cut. For example, the cutting blades 42c are used for that purpose. The fingers to be cut are selected, such that a force applied to the cutting plate 34 is equally distributed. In other words, the cutting blades 42c are distributed regularly around the rotating axis Y.

In other embodiments, the cutting plate 34 is formed such that in each phase, the same number of fingers is cut at the same time, compared to the other phases. The cutting blades are then arranged accordingly as described above. For example, in an embodiment, in each phase four fingers are cut at the same time. Thus, in the example described above, in case of 20 fingers, five phases are used for cutting the fingers 7. The cutting plate 34 may be formed that also another number of fingers are cut at the same time, for example 3, 5 or 6 fingers to be cut in each phase.

In other words, during the movement, in particular the rotating movement of the cutting plate only a portion of all fingers 7 is cut at the same time and therefore the force required for cutting of the fingers is reduced. During one movement, all fingers 7 of the core component 5 are cut in several steps. Due to the reduced force, also the components of the cutting device 3 used for cutting is less used.

Further, the use of a plurality of cylinders 38, for example two, three or four, the force applied to the cutting plate 34 is regularly distributed about the circumference of the cutting plate 34.

During the rotation of the plate, gases from the space around the abutments 54, 56 are sucked, in particular through the first and/or second channels 68, 70.

The cutting of the fingers 7 will be now described in more detail, in particular in reference to the Figures 8 to 11. The cutting of each finger 7 is performed in two subphases.

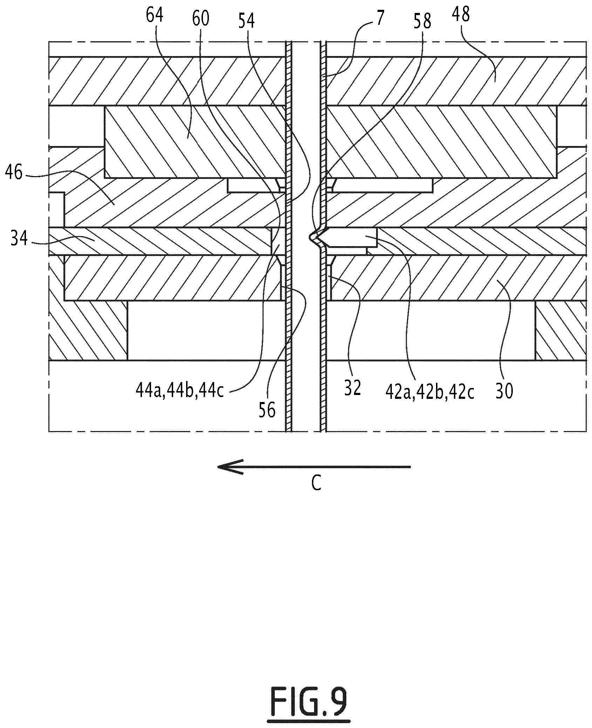

In a first subphase, the fingers 7 are quenched, as it can be seen from Figures 8 and 9. For that purpose, the cutting face 58 of the respective cutting blades 42a, 42b, 42c is not too sharp and in particular adapted to the material of the finger 7 to be cut.

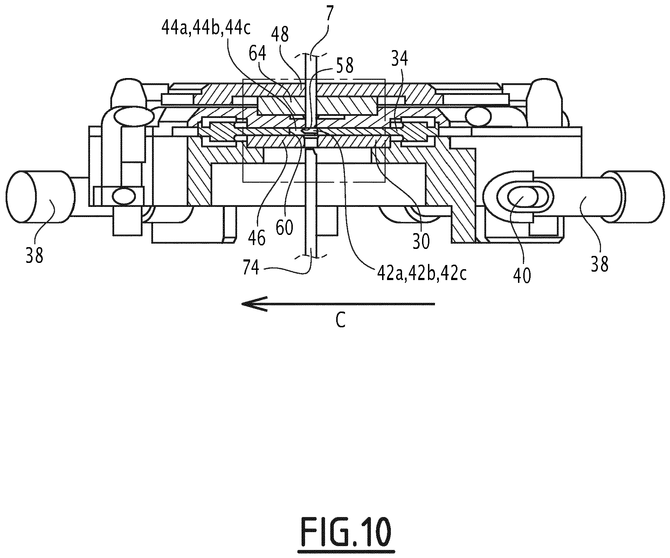

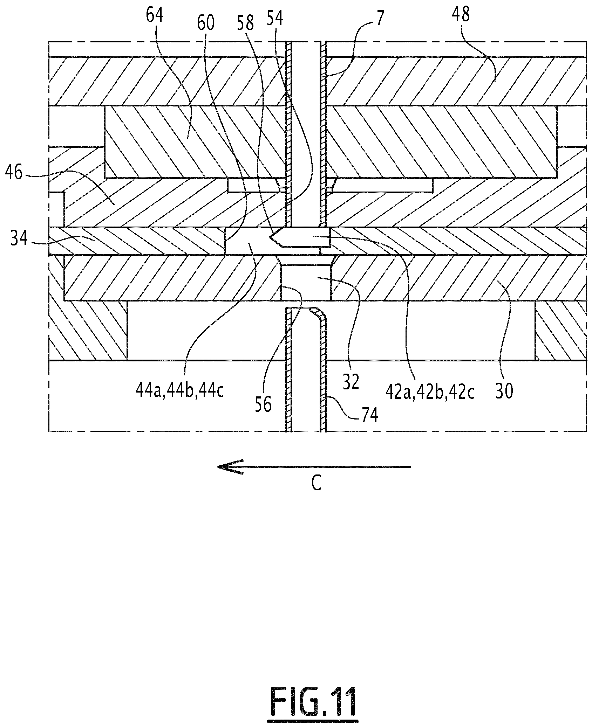

In a second subphase after the quenching, the fingers are cut, as it can be seen in Figures 10 and 11.

The quenching of the fingers 7 enable at least to partially seal the cut surfaces of the fingers 7. In other words, the active area for interaction with the water is reduced. Thus, for example it is avoided or reduced that material inside the fingers 7 is escaping from the finger 7. Further, the washing out of material inside the fingers by the water surrounding the cutting device 3 is reduced and therefore the contamination of the pool in which the cutting arrangement 1 is placed.

Further, as it can be seen in the Figures 8 to 11, the lower bearing plate 30 and/or the first upper bearing plate 46, 46' enable that the fingers 7 are cut and/or quenched without deforming or bending the remaining part of the fingers 7, in particular the parts which have not already been cut above the cutting device 3.

According to an embodiment, the cut portions 74 fingers 7 have a remaining length of about 1m.

The cut portions 74 of the fingers 7 fall via the one or more funnel shaped sections 14a, 14b and the one or more tubes 16a, 16b into the one or more containers 18a, 18b. As only a portion of the fingers are cut at the same time, the guiding of the cut fingers portions and the filling of the containers 18a, 18b is more coordinated and less chaotic.

After the cutting plate 34 has arrived at its final position, the cutting plate 34 is moved back to the starting position in step 1030. Optionally, then or prior to the backward movement, the at least one sealing device (62, 62', 64) is deactivated.

In step 1040, the fingers 7 are further lowered into the cutting device 3 in order to cut a further portion from each finger 7. Then the steps 1010 to 1040 are repeated until the no portion at the upper end of the fingers 7 remain at the upper end.

According to the invention the cutting device 3 and/or the cutting arrangement 1 does not include many electronic devices so that it is robust. Further, the cutting plate 34, the sealing device 62, 62'; 64, the lower bearing plate 30, the first upper bearing plate 46, 46' and/or the second upper bearing plate 48 can be adapted to the core component 5 to be cut, in particular the number and the location of the fingers. For example, these parts of the cutting device 3 can be exchanged with other ones.

### List of reference signs:

- X: longitudinal axis
- Y: rotating axis circumferential direction
- C 1: cutting arrangement
- 3: cutting device
- 5: core component
- 7: finger
- 9: holding portion
- 12: damping element
- 14a, 14b: funnel shaped section
- 16a, 16b: tube
- 18a, 18b: container
- 20a, 20b: vibrating and inclining device
- 22: carrier structure
- 30: lower bearing plate
- 32: hole
- 34: cutting plate
- 36: ear
- 38: cylinder
- 40: piston
- 41: radial bearing
- 42a, 42b, 42c: cutting blade
- 44a, 44b, 44c: holes
- 46, 46': first upper bearing plate
- 48: second upper bearing plate
- 50: hole
- 52: hole
- 54: abutment
- 56: abutment
- 58: cutting face
- 60: surface
- 62, 62': sleeve
- 63, 63': passage
- 64: sealing plate
- 66: surface
- 68: channel
- 70: channel
- 72: flow path
- 74: cut portion of finger

## Claims

1. Cutting device (3) for cutting a plurality of parallel fingers (7) of at least one core component (5) in a plane orthogonal to the longitudinal axis of the fingers (7), the fingers (7) being adapted to be introduced into the fuel assembly of a nuclear reactor core, the cutting device (3) comprising:
a first bearing plate (30, 46) comprising a plurality of abutments (54, 56) respectively for a finger (7) to be cut, **characterized in that** the cutting device (3) further comprises:
a rotatable cutting plate (34) comprising a corresponding cutting blade (42a, 42b, 42c) for each abutment (54, 56) in the first bearing plate, the rotatable cutting plate (34) being rotatable about a rotating axis (Y) between a starting position and a final position in a circumferential direction (C), the first bearing plate (30, 46) and the cutting plate (34) being parallel to each other, the cutting blades (42a, 42b, 42c) comprising a plurality of groups of cutting blades (42a, 42b, 42c), wherein for each group of cutting blades (42a, 42b, 42c) the angle between the cutting blades (42a, 42b, 42c) and the corresponding abutments (54, 56) is different to an angle between the cutting blades (42a, 42b, 42c) and the corresponding abutments (54, 56) of any other group of cutting blades.

2. Cutting device according to claim 1, comprising at least three groups of cutting blades (42a, 42b, 42c).

3. Cutting device according to one of the preceding claims, wherein each group of cutting blades (42a, 42b, 42c) comprises at least four cutting blades (42a, 42b, 42c).

4. Cutting device according to one of the preceding claims, wherein the first bearing plate (30, 46) is arranged above or below the cutting plate (34) and adjacent to the cutting plate (34).

5. Cutting device according to one of the preceding claims, comprising a second bearing plate (30, 46), wherein one of the first and second bearing plates is arranged below the cutting plate (34) and adjacent to the cutting plate (34), and the other of the first and second bearing plates (30, 46) is arranged above the cutting plate (34) and adjacent to the cutting plate (34).

6. Cutting device according to one of the preceding claims, wherein the first bearing plate (30, 46) and/or the second bearing plate (30, 46) comprises a plurality of holes (32, 50), wherein the abutments (54, 56) are provided at an inner surface of the respective holes (32, 50).

7. Cutting device according to one of the preceding claims further comprising at least one sealing device (62, 62', 64) arranged above the cutting plate (34), and, in particular, above the first or second bearing plate (30, 46) and adjacent to the first or second bearing plate (30, 46), wherein the sealing device comprises for each abutment (54, 56) a respective passage (63, 63') for the fingers (7), wherein the passages (63, 63') are aligned to the respective abutments (54, 56), wherein the sealing device is in particular adapted to seal the fingers when they are inserted into the passage (63, 63').

8. Cutting device according to claim 7, wherein the sealing device (62', 64) can be deactivated and activated, wherein, when the sealing device (62', 64) is activated, the diameter of the one or more passages (63') of the sealing device is reduced and, in particular, when the sealing device (62', 64) is deactivated the diameter of the one or more passages (63') of the sealing device is increased.

9. Cutting device according to claim 8, wherein the sealing device (62', 64) is electrically, mechanically, pneumatically and/or hydraulically activated.

10. Cutting device according to one of the preceding claims 7 to 10, wherein the at least one sealing device (62, 62', 64) is a sealing plate (64).

11. Cutting device according to one of the preceding claims 7 to 10, wherein at least one channel (68, 70) is provided in the sealing device (64), the first bearing plate (30, 46, 46') and/or the second bearing plate (30, 46, 46'), wherein the at least one channel guides gases from the abutments (54, 56) away.

12. Cutting device according to one of the preceding claims, wherein the cutting device (3) includes a one or more pneumatic or hydraulic cylinders (38) in order to rotate the cutting plate (34) about the rotating axis (Y).

13. Cutting device according to one of the preceding claims, wherein the core component (5) is a control rod assembly, a neutron source, poisson rods, and/or a flow restrictor.

14. Method for cutting a plurality of parallel fingers (7) of at least one core component (5) in a plane orthogonal to the longitudinal axis of the fingers (7) with a cutting device (3) according to one of the preceding claims, the fingers (7) being adapted to be introduced into the fuel assembly of a nuclear reactor core, the method comprising:
inserting (1000) the fingers (7) into the cutting device (3);
rotating (1020) the cutting plate (34) from the starting position to the final position,
wherein a first portion of the fingers (7) is cut during a first phase of the rotating movement of the cutting plate (34) from the starting position to the final position and a second portion of the fingers (7) is cut during a second phase of the rotating movement of the cutting plate (34) from the starting position to the final position.

15. Method according to claim 14, further comprising:
prior to rotating the cutting plate, activating the sealing device (62, 62', 64); and
during the rotation of the plate, sucking gases from the space around the abutments (54, 56).

## Patentansprüche

1. Schneidvorrichtung (3) zum Schneiden einer Vielzahl von parallelen Fingern (7) mindestens einer Kernkomponente (5) in einer Ebene orthogonal zu der Längsachse der Finger (7), wobei die Finger (7) angepasst sind, um in das Brennelement eines Kernreaktorkerns eingeführt zu werden, die Schneidvorrichtung (3) umfassend:
eine erste Lagerplatte (30, 46), umfassend eine Vielzahl von Anschlägen (54, 56) jeweils für einen zu schneidenden Finger (7), **dadurch gekennzeichnet, dass** die Schneidvorrichtung (3) ferner Folgendes umfasst:
eine drehbare Schneidplatte (34), umfassend ein entsprechendes Schneidmesser (42a, 42b, 42c) für jeden Anschlag (54, 56) in der ersten Lagerplatte, wobei die drehbare Schneidplatte (34) um eine Drehachse (Y) zwischen einer Ausgangsposition und einer Endposition in einer Umfangsrichtung (C) drehbar ist, wobei die erste Lagerplatte (30, 46) und die Schneidplatte (34) parallel zueinander sind, die Schneidmesser (42a, 42b, 42c) umfassend eine Vielzahl von Gruppen von Schneidmessern (42a, 42b, 42c), wobei für jede Gruppe von Schneidmessern (42a, 42b, 42c) der Winkel zwischen den Schneidmessern (42a, 42b, 42c) und den entsprechenden Anschlägen (54, 56) sich von einem Winkel zwischen den Schneidmessern (42a, 42b, 42c) und den entsprechenden Anschlägen (54, 56) jeder anderen Gruppe von Schneidmessern unterscheidet.

2. Schneidvorrichtung nach Anspruch 1, umfassend mindestens drei Gruppen von Schneidmessern (42a, 42b, 42c).

3. Schneidvorrichtung nach einem der vorherigen Ansprüche, wobei jede Gruppe von Schneidmessern (42a, 42b, 42c) mindestens vier Schneidmesser (42a, 42b, 42c) umfasst.

4. Schneidvorrichtung nach einem der vorherigen Ansprüche, wobei die erste Lagerplatte (30, 46) oberhalb oder unterhalb der Schneidplatte (34) und angrenzend an die Schneidplatte (34) angeordnet ist.

5. Schneidvorrichtung nach einem der vorherigen Ansprüche, umfassend eine zweite Lagerplatte (30, 46), wobei eine von der ersten und der zweiten Lagerplatte unterhalb der Schneidplatte (34) und angrenzend an die Schneidplatte (34) angeordnet ist und die andere von der ersten und der zweiten Lagerplatte (30, 46) oberhalb der Schneidplatte (34) und angrenzend an die Schneidplatte (34) angeordnet ist.

6. Schneidvorrichtung nach einem der vorherigen Ansprüche, wobei die erste Lagerplatte (30, 46) und/oder die zweite Lagerplatte (30, 46) eine Vielzahl von Löchern (32, 50) umfasst, wobei die Anschläge (54, 56) an einer Innenfläche der jeweiligen Löcher (32, 50) bereitgestellt sind.

7. Schneidvorrichtung nach einem der vorherigen Ansprüche, ferner umfassend mindestens eine oberhalb der Schneidplatte (34), insbesondere oberhalb der ersten oder der zweiten Lagerplatte (30, 46) und angrenzend an die erste oder die zweite Lagerplatte (30, 46) angeordneten Dichtungsvorrichtung (62, 62', 64), wobei die Dichtungsvorrichtung für jeden Anschlag (54, 56) einen jeweiligen Durchgang (63, 63') für die Finger (7) umfasst, wobei die Durchgänge (63, 63') zu den jeweiligen Anschlägen (54, 56) ausgerichtet sind, wobei die Dichtungsvorrichtung insbesondere angepasst ist, um die Finger abzudichten, wenn sie in den Durchgang (63, 63') eingeführt werden.

8. Schneidvorrichtung nach Anspruch 7, wobei die Dichtungsvorrichtung (62', 64) deaktivierbar und aktivierbar ist, wobei bei aktivierter Dichtungsvorrichtung (62', 64) der Durchmesser des einen oder der mehreren Durchgänge (63') der Dichtungsvorrichtung verringert wird und insbesondere bei deaktivierter Dichtungsvorrichtung (62', 64) der Durchmesser des einen oder der mehreren Durchgänge (63') der Dichtungsvorrichtung vergrößert wird.

9. Schneidvorrichtung nach Anspruch 8, wobei die Dichtungsvorrichtung (62', 64) elektrisch, mechanisch, pneumatisch und/oder hydraulisch aktiviert wird.

10. Schneidvorrichtung nach einem der vorherigen Ansprüche 7 bis 10, wobei die mindestens eine Dichtungsvorrichtung (62, 62', 64) eine Dichtungsplatte (64) ist.

11. Schneidvorrichtung nach einem der vorherigen Ansprüche 7 bis 10, wobei in der Dichtungsvorrichtung (64), der ersten Lagerplatte (30, 46, 46') und/oder der zweiten Lagerplatte (30, 46, 46') mindestens ein Kanal (68, 70) bereitgestellt ist, wobei der mindestens eine Kanal Gase von den Anschlägen (54, 56) wegleitet.

12. Schneidvorrichtung nach einem der vorherigen Ansprüche, wobei die Schneidvorrichtung (3) einen oder mehrere pneumatische oder hydraulische Zylinder (38) aufweist, um die Schneidplatte (34) um die Drehachse (Y) zu drehen.

13. Schneidvorrichtung nach einem der vorherigen Ansprüche, wobei die Kernkomponente (5) eine Steuerstabanordnung, eine Neutronenquelle, Poissonstäbe und/oder ein Strömungsbegrenzer ist.

14. Verfahren zum Schneiden mehrerer paralleler Finger (7) mindestens einer Kernkomponente (5) in einer Ebene orthogonal zu der Längsachse der Finger (7) mit einer Schneidvorrichtung (3) nach einem der vorherigen Ansprüche, wobei die Finger (7) in das Brennelement eines Kernreaktorkerns einführbar sind, das Verfahren umfassend:
Einführen (1000) der Finger (7) in die Schneidvorrichtung (3);
Drehen (1020) der Schneidplatte (34) von der Startposition in die Endposition, wobei ein erster Abschnitt der Finger (7) während einer ersten Phase der Drehbewegung der Schneidplatte (34) von der Startposition in die Endposition geschnitten wird und ein zweiter Abschnitt der Finger (7) während einer zweiten Phase der Drehbewegung der Schneidplatte (34) von der Startposition in die Endposition geschnitten wird.

15. Verfahren nach Anspruch 14, ferner umfassend:
vor Drehen der Schneidplatte, Aktivieren der Dichtungsvorrichtung (62, 62', 64); und
während der Drehung der Platte, Absaugen von Gasen aus dem Raum um die Anschläge (54, 56).

## Revendications

1. Dispositif de coupe (3) pour couper une pluralité de doigts parallèles (7) d'au moins un composant du coeur (5) dans un plan orthogonal à l'axe longitudinal des doigts (7), les doigts (7) étant destinés à être introduits dans l'assemblage combustible du coeur d'un réacteur nucléaire, le dispositif de coupe (3) comprenant :
une première plaque d'appui (30, 46) comprenant une pluralité de butées (54, 56) respectivement pour un doigt (7) à couper, **caractérisé en ce que** le dispositif de coupe (3) comprend en outre :
une plaque de coupe rotative (34) comprenant une lame de coupe correspondante (42a, 42b, 42c) pour chaque butée (54, 56) dans la première plaque d'appui, la plaque de coupe rotative (34) pouvant tourner autour d'un axe de rotation (Y) entre une position de départ et une position finale dans une direction circonférentielle (C), la première plaque d'appui (30, 46) et la plaque de coupe (34) étant parallèles l'une à l'autre, les lames de coupe (42a, 42b, 42c) comprennent plusieurs groupes de lames de coupe (42a, 42b, 42c), dans lesquels, pour chaque groupe de lames de coupe (42a, 42b, 42c), l'angle entre les lames de coupe (42a, 42b, 42c) et les butées correspondantes (54, 56) est différent de l'angle entre les lames de coupe (42a, 42b, 42c) et les butées correspondantes (54, 56) de n'importe quel autre groupe de lames de coupe.

2. Dispositif de coupe selon la revendication 1, comprenant au moins trois groupes de lames de coupe (42a, 42b, 42c).

3. Dispositif de coupe selon l'une des revendications précédentes, dans lequel chaque groupe de lames de coupe (42a, 42b, 42c) comprend au moins quatre lames de coupe (42a, 42b, 42c).

4. Dispositif de coupe selon l'une des revendications précédentes, dans lequel la première plaque d'appui (30, 46) est disposée au-dessus ou au-dessous de la plaque de coupe (34) et adjacente à la plaque de coupe (34).

5. Dispositif de coupe selon l'une des revendications précédentes, comprenant une seconde plaque d'appui (30, 46), dans laquelle l'une de la première et de la seconde plaques d'appui est disposée sous la plaque de coupe (34) et adjacente à la plaque de coupe (34), et l'autre de la première et de la seconde plaques d'appui (30, 46) est disposée au-dessus de la plaque de coupe (34) et adjacente à la plaque de coupe (34).

6. Dispositif de coupe selon l'une des revendications précédentes, dans lequel la première plaque d'appui (30, 46) et/ou la seconde plaque d'appui (30, 46) comprend (comprennent) une pluralité de trous (32, 50), les butées (54, 56) étant prévues sur une surface intérieure des trous respectifs (32, 50).

7. Dispositif de coupe selon l'une des revendications précédentes comprenant en outre au moins un dispositif d'étanchéité (62, 62', 64) disposé au-dessus de la plaque de coupe (34), et, en particulier, au-dessus de la première ou de la seconde plaque d'appui (30, 46) et adjacent à la première ou à la seconde plaque d'appui (30, 46), dans lequel le dispositif d'étanchéité comprend pour chaque butée (54, 56) un passage respectif (63, 63') pour les doigts (7), dans lequel les passages (63, 63') sont alignés sur les butées respectives (54, 56), dans lequel le dispositif d'étanchéité est en particulier adapté pour sceller les doigts lorsqu'ils sont insérés dans le passage (63, 63').

8. Dispositif de coupe selon la revendication 7, dans lequel le dispositif d'étanchéité (62', 64) peut être désactivé et activé, dans lequel, lorsque le dispositif d'étanchéité (62', 64) est activé, le diamètre du ou des passages (63') du dispositif d'étanchéité est réduit et, en particulier, lorsque le dispositif d'étanchéité (62', 64) est désactivé, le diamètre du ou des passages (63') du dispositif d'étanchéité est augmenté.

9. Dispositif de coupe selon la revendication 8, dans lequel le dispositif d'étanchéité (62', 64) est activé électriquement, mécaniquement, pneumatiquement et/ou hydrauliquement.

10. Dispositif de coupe selon l'une des revendications précédentes 7 à 10, dans lequel le au moins un dispositif de scellement (62, 62', 64) est une plaque de scellement (64).

11. Dispositif de coupe selon l'une des revendications précédentes 7 à 10, dans lequel au moins un canal (68, 70) est prévu dans le dispositif d'étanchéité (64), la première plaque d'appui (30, 46, 46') et/ou la seconde plaque d'appui (30, 46, 46'), dans lequel au moins un canal éloigne les gaz des butées (54, 56).

12. Dispositif de coupe selon l'une des revendications précédentes, dans lequel le dispositif de coupe (3) comprend un ou plusieurs cylindres pneumatiques ou hydrauliques (38) afin de faire tourner la plaque de coupe (34) autour de l'axe de rotation (Y).

13. Dispositif de coupe selon l'une des revendications précédentes, dans lequel le composant central (5) est un assemblage de barres de contrôle, une source de neutrons, des tiges de poisson et/ou un limiteur de débit.

14. Procédé de découpe d'une pluralité de doigts parallèles (7) d'au moins un composant du cœur (5) dans un plan perpendiculaire à l'axe longitudinal des doigts (7) avec un dispositif de découpe (3) selon l'une des revendications précédentes, les doigts (7) étant destinés à être introduits dans l'assemblage combustible d'un cœur de réacteur nucléaire, le procédé comprenant :
l'insertion (1000) des doigts (7) dans le dispositif de coupe (3) ;
la rotation (1020) de la plaque de coupe (34) de la position de départ à la position finale, une première partie des doigts (7) étant coupée pendant une première phase du mouvement de rotation de la plaque de coupe (34) de la position de départ à la position finale et une seconde partie des doigts (7) étant coupée pendant une seconde phase du mouvement de rotation de la plaque de coupe (34) de la position de départ à la position finale.

15. Procédé selon la revendication 14, comprenant en outre :
avant la rotation de la plaque de coupe, l'activation du dispositif d'étanchéité (62, 62', 64) ; et pendant la rotation de la plaque, l'aspiration des gaz de l'espace autour des butées (54, 56).
